# EUROPÄISCHE PATENTANMELDUNG

(11) **EP 3 968 105 A1**
(43) Veröffentlichungstag der Anmeldung: **16.03.2022**
(21) Anmeldenummer: 20195562.2
(22) Anmeldetag: 10.09.2020
(51) Int. Cl.: G05B 17/02

(54) **SIMULATION EINER ANLAGE ODER MASCHINE**

(71) Anmelder: Siemens Aktiengesellschaft, 80333 München (DE)
(72) Erfinder: Dobler-Zuck, Kurt, 91074 Herzogenaurach (DE)

(57) **Zusammenfassung**

Die Erfindung betrifft ein computerimplementiertes Verfahren zur Simulation einer Anlage oder Maschine, wobei ein Simulationsmodell bereitgestellt wird, wobei dem Simulationsmodell Eingangsdaten betreffend die Anlage oder Maschine vorgegeben werden, wobei dem Simulationsmodell ferner Akustikdaten vorgegeben werden wobei das Simulationsmodell basierend auf den Eingangsdaten und den Akustikdaten eine Simulation der Anlage oder Maschine mittels akustischer Signale bewirkt.

## Beschreibung

Die Erfindung betrifft ein computerimplementiertes Verfahren zur Simulation einer Anlage oder Maschine sowie eine Simulationseinheit zum Simulieren einer Anlage oder Maschine.

Simulationen gewinnen bei Inbetriebnahme oder für die Wartung oder Überwachung von Automatisierungsanlagen in der Industrie zunehmend an Bedeutung. Bei bisher vorhandenen Simulationssystemen für Planung, Inbetriebnahme, Test oder Training an Maschinen und Anlagen liefert der "Digitale Zwilling" visuelle Informationen.

Bislang erfolgt die Simulation visuell, mittels grafischer Darstellungen, Traceaufzeichnungen, Watchtabellen und Bedien- bzw. Statusmasken.

Vor diesem Hintergrund ist es eine Aufgabe der vorliegenden Erfindung, eine verbesserte Simulation bereitzustellen.

Die Erfindung betrifft ein computerimplementiertes Verfahren zur Simulation einer Anlage oder Maschine, wobei ein Simulationsmodell bereitgestellt wird, wobei dem Simulationsmodell Eingangsdaten betreffend die Anlage oder Maschine vorgegeben werden, wobei dem Simulationsmodell ferner Akustikdaten vorgegeben werden; wobei das Simulationsmodell basierend auf den Eingangsdaten und den Akustikdaten eine Simulation der Anlage oder Maschine mittels akustischer Signale bewirkt.

Unter einer Anlage werden in der vorliegenden Anmeldung auch mehrere Maschinen verstanden. Unter einer Maschine werden auch Komponenten einer Maschine verstanden. Insbesondere sind die vorgeschlagenen Verfahren zur Simulation einer Anlage oder Maschine ebenso auf die Simulation mehrerer Maschinen oder Komponenten einer Maschine sowie Kombinationen daraus anzuwenden.

Es wird ein Simulationsmodell bereitgestellt, das interessierende Bestandteile oder Prozesse oder Bewegungen oder Zustände einer realen Anlage oder Maschine simuliert. Dabei kann es sich um eine Simulation zur Laufzeit handeln und die Simulation beispielsweise zu Fernwartungszwecken oder zu Zwecken der Fern-Überwachung erfolgen oder zur Überwachung nicht oder nur schwer einsehbarer Vorgänge.

Ebenso kann es sich um eine Simulation zu einem Inbetriebnahme-Zeitpunkt handeln oder eine Simulation in einem Service-Intervall, in dem eine Anlage oder Maschine stillsteht oder ferner unabhängig vom Betrieb, beispielsweise zu Trainings- oder Schulungszwecken.

Es werden Eingabedaten vorgegeben, die das Simulationsmodell für die Durchführung der Simulation benötigt. Dabei kann es sich um eine Nachbildung von Prozessabläufen, Fertigungsschritten o.ä. handeln. Dem Simulationsmodell werden ferner Akustikdaten vorgegeben. Diese ermöglichen eine akustische oder klangliche Darstellung von Informationen, die das Simulationsmodell anhand der Akustikdaten und der Eingabedaten ermittelt.

Die Einbeziehung von akustischen Daten in eine mittels des Simulationsmodells erfolgende Simulation befreit Darstellungen digitaler Zwillinge vorteilhaft aus dem "Stummfilm-Modus" und ermöglicht akustische Rückmeldungen. Diese akustischen Rückmeldungen beeinflussen die Qualität der Simulation wesentlich. Insbesondere bewirkt eine Darstellung einer Simulation mit akustischen Simulationsdaten eine deutliche Annäherung an eine reale simulierte Anlage oder Maschine.

Auf vorteilhafte Weise kann ein Nutzer der Simulation, der beispielsweise eine Wartung oder Überwachung oder Inbetriebnahme der Anlage oder Maschine durchführt, seinen Gehörsinn als zusätzlichen Sinn, beispielsweise zusätzlich zum visuellen Betrachten einer graphischen Simulation, nutzen.

Insbesondere kennen viele Anwender ihre Anlage oder Maschine so gut, dass sie bereits aus der Ferne an einem Geräusch ein fehlerhaftes Verhalten erkennen können. Sie müssen beispielsweise nicht erst eine Vielzahl von Parametern oder eine Alarmliste überprüfen, um zu erkennen, dass ein Fehler vorliegt. Manche Arten von Fehlern an der Anlage oder Maschine werden beispielsweise im normalen Betrieb gar nicht gemeldet, sondern sind ohne weitere Auswertung oder Analyse nur hörbar.

Ferner kann der Einsatzzweck auch in Trainings oder Schulungen bestehen, insbesondere neuer oder unerfahrener Operateure einer Maschine oder Anlage. So kann vorteilhaft das Geräusch einer funktionstüchtigen Maschine oder Anlage vermittelt werden.

Solche Geräusche sind vorteilhaft simulierbar und geben bei einer akustischen Simulation Auskunft über Störverhalten, alternativ oder zusätzlich zu einer graphischen Simulation.

Mit anderen Worten wird eine akustische Anzeige genutzt, um Zustände der Anlage oder Maschine darzustellen.

Es erfolgt ein akustisches Auswerten der Simulation. Beispielsweise werden durch die Simulation Daten, Werte oder Zustände der Anlage oder Maschine ermittelt, die die akustische Wiedergabe basierend auf den Akustikdaten beeinflussen.

Somit werden die Geräusche der Anlage oder Maschine simuliert. Beispielsweise werden Motorgeräusche entsprechend der Drehzahl, Töne repräsentierend das Ablassen von Druckluft beim Öffnen eines Ventils, Alarmsirenen etc. ausgegeben. Dabei können diese Sounds, Töne oder Geräusche nicht nur Bewegungen zugeordnet werden, sondern beispielsweise auch Vorgängen wie einem Speichern eines Rezepts, Stoppen einer Maschine, Umschalten der Betriebsart oder einem Einleiten von Alarmen.

Gemäß einer Ausgestaltung umfassen die Eingangsdaten des Simulationsmodells Eingangs-, Ausgangs- und/ oder Zwischensignale der Anlage oder Maschine. Damit dienen diese Eingangsdaten als Input für die Simulation. Anhand des Simulationsmodells, das die Anlage oder Maschine modelliert, und der dem Simulationsmodell vorgegebenen Eingangsdaten erfolgt eine Simulation der Anlage oder Maschine zu beliebigen Zwecken, beispielsweise einem Hochfahren während einer Inbetriebnahme oder einem Testbetrieb mit geänderten Parametern etc.

Als Eingangssignale der Anlage oder Maschine werden beispielsweise Sollwerte für eine Motorgeschwindigkeit oder eine Stellposition für eine Klappe oder beliebige andere Signale, die insbesondere einer Steuerung oder mehreren Steuerungen der Anlage oder Maschine vorgegeben werden.

Als Zwischensignale werden insbesondere Steuerungs-intern erzeugte und vorgehaltene oder gespeicherte oder weitergeleitete Signale oder Parameter verstanden, beispielsweise ein Puffer-Wert betreffend die Anzahl an Einträgen in einem Puffer. Beispielsweise bewirkt das Überschreiten eines Grenzwertes für Einträge einen Wach-Zustand oder das Auslösen eines Wach-Zustands, was anhand des Zwischensignals simuliert wird.

Als Ausgangssignale kommen insbesondere an Aktuatoren ausgegebene Signale, beispielsweise von der Steuerung ausgegebene Signale, in Betracht oder mittels Sensoren oder mittels Gebern bestimmte Signale in Betracht, die die Simulation beeinflussen.

In Ausgestaltungen können alle Eingangsdaten für die Simulation erzeugt sein, d.h. ohne Bezug zu einer realen Situation sein oder mit anderen Worten künstlich generiert sein. In Ausgestaltungen können Eingangsdaten teilweise für die Simulation erzeugt worden sein, teilweise aus realen Messungen stammen oder auf realen Messungen basierend und aus diesen weiterbearbeitet oder abgeleitet sein.

Gemäß einer Ausgestaltung umfassen die Eingangsdaten der Simulation Parameter betreffend eine Mechanik oder Elektronik oder einen Zustand der Anlage oder Maschine oder Sensordaten.

Beispielsweise geben die Parameter Auskunft über Positionen, Geschwindigkeiten, Füllstände, Ventilpositionen, die Beschaltung von Leuchten oder Leuchtdioden, Betriebszustände, Alarme etc.

Gemäß einer Ausgestaltung werden die Akustikdaten in einer Bibliothek gespeichert. Dabei handelt es sich insbesondere um auf einer Simulationseinrichtung abgespeicherte Bibliotheken oder um eine Online-Bibliothek. In der Bibliothek sind die gebräuchlichsten Geräusche oder Sounds, insbesondere Basis-Sounds, enthalten.

Gemäß einer Ausgestaltung werden die Akustikdaten in Abhängigkeit von den Eingangsdaten parametriert.

Je nach Eingangsdaten, die dem Simulationsmodell vorgegeben werden, ergibt sich eine simulierte Anlage oder Maschine. Die aufgrund der Akustikdaten zugehörigen Geräusche oder Töne für die akustische Simulation sind beispielsweise anhand der Eingangsdaten und/ oder der Simulation direkt ausgebbar.

Beispielsweise wird ein Geräusch oder werden Töne wiedergegeben, die in der Akustikbibliothek für einen bestimmten simulierten Aspekt vorgegeben sind.

Anhand der Parametrierung werden die akustischen Signale abhängig von der simulierten Anlage oder Maschine oder deren simulierten Zuständen oder Werten erzeugt. Die AkustikBibliothek enthält dafür Akustikdaten, die eine Parametrierung beinhalten.

Beispielsweise wird ein Typ von Geräusch oder eine Tonabfolge abhängig von einer variablen Größe, die sich aus der Simulation ergibt, verändert. Beispielsweise ändert sich eine Frequenz eines Tons oder ein Takt einer Tonfolge oder ein Abstand zwischen Geräuschen oder eine Geschwindigkeit, in der ein Sound abgespielt wird, ein Soundverlauf oder eine Verortung, insbesondere Stereo- oder 3D Sound, oder ein gesprochener Text, z.B. ein Warnhinweis, Fehlermeldung, etc. abhängig von aktuellen Parametern.

So kann z.B. die Frequenz oder die Abspielgeschwindigkeit eines Basis-Sounds in Abhängigkeit von der Motordrehzahl oder einer Fließgeschwindigkeit stehen. Die Lautstärke eines Transportbandes kann vom Öffnungswinkel einer Klappe oder eines Drehmoments abhängig sein.

Beispielsweise nutzt die Simulation zur Ausgabe des akustischen Simulationsergebnisses einen Basis-Sound aus der Akustikbibliothek, wenn eine Maschine mit einer Geschwindigkeit in einem bestimmten Geschwindigkeitsbereich läuft. Ändert die Maschine gemäß der Simulation die Geschwindigkeit, so wird der Basis-Sound parametriert in Abhängigkeit von der Geschwindigkeit ausgegeben.

Die ausgegebenen akustischen Signale müssen dabei nicht zwangsläufig Originalgeräuschen entsprechen, die an der realen Maschine entstehen würden. Auch Nachbildungen kommen in Betracht. Jedoch ist eine akustische Abbildung der jeweiligen sich durch die Simulation ergebende Funktionalität oder Aktivität vorgesehen.

Gemäß einer Ausgestaltung erfolgt die Simulation während eines Betriebs der Anlage oder Maschine. Beispielsweise wird so ein Remote-Betrieb, d.h. eine Bedienung nicht vor Ort, zur Wartung oder Überprüfung genutzt. Beispielsweise kann beim Einsatz eine VR/AR-Brille diese Funktionalität zusätzlich genutzt werden um einen besseren oder Realitäts-näheren "Kontakt zur Maschine" zu erhalten.

Gemäß einer Ausgestaltung erfolgt die Simulation zeitlich einem Betrieb der Anlage oder Maschine vorgelagert. Beispielsweise wird so ein Remote-Betrieb, d.h. eine Bedienung nicht vor Ort, zum Inbetriebnehmen oder vor einer Umstellung oder um-Konfiguration oder geänderter Parametrierung ermöglicht.

Gemäß einer Ausgestaltung bewirkt das Simulationsmodell basierend auf den Eingangsdaten zusätzlich eine Simulation der Anlage oder Maschine mittels graphischer Signale. Dabei kann für die graphische Visualisierung auf bekannte Verfahren und Technologien zurückgegriffen werden.

Für den menschlichen Nutzer ergeben sich durch die Verknüpfung von graphischer und akustischer Simulation eine optimales Erfahrungserlebnis. Der "optische Stress" wird insbesondere bei aufwändigen und umfassenden Simulationen großer Anlagen oder komplexer Maschinen reduziert. Das Simulationserlebnis wird noch realer und man fühlt sich mit der Maschine oder Anlage wesentlich enger verbunden.

Dabei können Eingangs- Ausgangs- oder Zwischensignalen einer Maschinen- oder Anlagensteuerung mit visuellen oder grafischen Komponenten, wie beispielsweise Förderbänder oder Ventile, verknüpft werden und deren graphische Abbildung, beispielsweise auf einem Visualisierungs-Display bestimmen.

Die Erfindung betrifft ferner eine Simulationseinheit zum Simulieren einer Anlage oder Maschine, aufweisend eine Schnittstelle zum Erhalten von Eingangsdaten betreffend die Anlage oder Maschine, eine weitere Schnittstelle zum Erhalten von Akustikdaten, einen Logikbaustein zum Durchführen der Simulation auf Basis eines Simulationsmodells, der Eingangsdaten und der Akustikdaten und eine Ausgabeeinheit zum Ausgeben eines Simulationsergebnisses umfassend akustische Signale.

Die Simulationseinheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Insbesondere ist der Logikbaustein ein Prozessor, wobei unter einem Prozessor eine elektronische Schaltung zur computerbasierten Datenverarbeitung verstanden wird, beispielsweise eine CPU. Es kann sich um die CPU eines Computers handeln oder um einen Mikroprozessor eines Mikrochips. Der Logikbaustein kann auch als Sound-Engine bezeichnet werden.

Gemäß einer Ausgestaltung weist die Simulationseinheit ferner eine Nutzerschnittstelle zum Parametrieren der Akustikdaten in Abhängigkeit von den Eingangsdaten auf.

Gemäß einer Ausgestaltung ist die Ausgabeeinheit ferner für eine graphische Visualisierung ausgebildet.

Das Verhalten der Anlage oder Maschine wird mit Hilfe des vorgeschlagenen Verfahrens hörbar gemacht und damit eine deutliche Erweiterung der Wahrnehmung bei virtuellen oder digitalen Zwillingen von Anlagen oder Maschine erreicht. Der digitale Zwilling "spricht" auf vorteilhafte Weise zum Nutzer. Beim digitalen Zwilling mit Ton wird das Verhalten der Maschine wesentlich intensiver wahrgenommen. Fehlverhalten wird dadurch früher erkannt. Graphisch nicht darstellbare Fehler, die aber an der realen Anlage oder Maschine sofort aufgrund der Geräusche, Tonhöhen, o.ä. akustischen Markern erkannt würden, werden mit dem vorgeschlagenen Verfahren vorteilhaft bereits bei der Simulation erkannt. Dies reduziert vorteilhaft Entwicklungszeit und Entwicklungskosten.

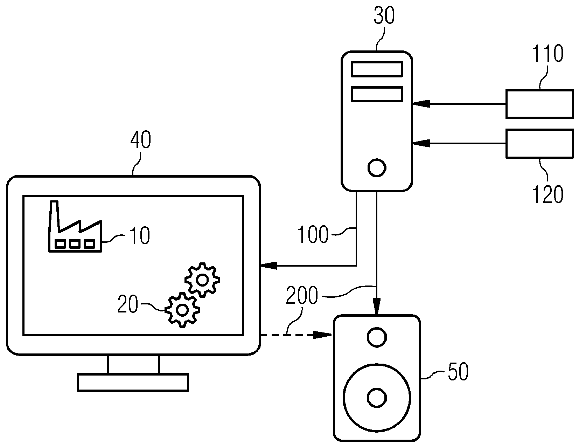

Die Erfindung wird nachfolgend anhand von Ausführungsbeispielen mit Hilfe der Figur näher erläutert. Figur 1 zeigt eine schematische Darstellung eines Systems zur graphischen und akustischen Visualisierung einer Simulation gemäß einem Ausführungsbeispiel der Erfindung.

Ein Ausführungsbeispiel der Erfindung betrifft eine Spritzgießmaschine 20 und deren Simulation während einer Inbetriebnahme, einem Test und Training oder einer Akquise für Messen und Demonstrationen beim Kunden.

Die Spritzgießmaschine 20 sowie eine Fertigungs-Anlage 10, deren Bestandteil die Spritzgießmaschine 20 ist, werden mittels eines Simulationsmodells beschrieben. Das Simulationsmodell wird mit Eingangsdaten 110 versorgt, welche die Spritzgießmaschine 20 in einem zu simulierenden Zeitpunkt oder unter zu simulierenden Bedingungen beschreiben. Über einen Display 40 werden die Spritzgießmaschine 20 und zu Teilen auch die Anlage 10 graphisch visualisiert. Dazu werden graphische Signale 100 von einer Simulationseinheit 30 erzeigt und dem Display 40 bereitgestellt.

Für die Spritzgießmaschine 20 ist eine Sound-Bibliothek als Akustikdaten 120 vorgesehen, welche die gebräuchlichsten Basis-Sounds umfasst. So werden beispielsweise das Öffnen und Schließen des Werkzeugs, das Dosieren und Einspritzen genauso akustisch hinterlegt wie das Auswerfen des fertigen Spritzteils.

Diese Bibliothek wird mit kundenspezifischen Geräuschen und gesprochenen Texten erweitert.

Alle in der Bibliothek enthalten Sounds bilden die Akustikdaten 120, welche von einer in das Ablaufsystem der Simulationssoftware implementierten Sound-Engine als Logikbaustein einer Simulationseinheit 30 verarbeitet werden und zu einer Ausgabe der Akustiksignale 200 an einen Lautsprecher 50 direkt oder über das Display 40 führen. Statt eines Lautsprechers 50 können auch Kopfhörer zum Einsatz kommen.

Es erfolgt eine Kopplung der Akustikdaten 120 an die Eingangsdaten 110, wodurch die von der Sound-Engine zur Verfügung gestellten akustischen Signale 200 parametriert werden.

Die Sound-Engine ist in der Lage gleichzeitig mehrere unterschiedliche Sounds zu starten, zu stoppen und zu verändern, so dass die Sounds dynamisch an die aktuelle simulierte Situation der Spritzgießmaschine 20 und der Anlage 10 angepasst werden.

So wie im Fehlerfall an der realen Spritzgießmaschine 20 eine Hupe erklingt, ist sie auch in der Simulation hörbar. Ebenso klingt in der akustischen Simulation das Schließen des Werkzeugs annähernd wie in der Realität.

Die in der Sound-Engine realisierten Funktionen und vorgesehenen Parametrierungen geben den Umfang der dynamisch erzeugbaren Sounds vor.

Zum Verschalten der Sounds an die Akustikdaten wird eine Parametrierungs-Schnittstelle definiert und es werden entsprechende Masken innerhalb der bereits vorhandenen Simulationssoftware eingebunden. Das Format der Sound-Dateien, insbesondere MP3, WAV, etc., in der zu erstellenden Sound-Bibliothek ist an die Realisierung der Sound-Engine angepasst.

Zur Sound-Ausgabe der Akustiksignale 200 kann sowohl ein Lautsprechersystem als auch ein Kopfhörer genutzt werden. Wahlweise ist die Soundausgabe abschaltbar, je nach Umgebung, in der die Simulation eingesetzt wird.

Die Sounds werden beispielsweise gekoppelt an digitale und analoge Ein- und Ausgänge, wie insbesondere positive oder negative Flanken, die ein Öffnen einer Schutztür, ein Schließen eines Ventils, etc. beschreiben, oder positive oder negative Pegel, die ein eingeschaltetes Gebläse, o.ä. beschreiben.

Die Sounds können auch an analoge Ein- und Ausgänge gekoppelt werden, so dass Signale abhängig von Analogwerten, wie insbesondere eine Pumpendrehzahl, ein Behälterfüllstand, eine Schlittenposition, ein Klemmmoment, etc., erzeugt werden.

Ferner können auch interne Zustände gekoppelt werden und zum Ausgeben von Alarmbits, Zustandsbits oder intern berechneten Werten wie Alarmen, Betriebsarten-Umschaltung, etc. führen.

Vorteilhaft erfolgt eine Kopplung zwischen Eingangsdaten und Akustikdaten und eine Ausgabe von sich dynamisch an das Simulationsergebnis anpassenden Sounds. Vorteilhaft wird ferner eine kundenspezifisch erweiterbare Sound-Bibliothek bereitgestellt. Es erfolgt eine Parametrisierung der Sounds mit den Eingangsdaten, welche zur dynamischen Erzeugung von akustischen Simulationssignalen führt für eine akustische Auswertung der Simulation.

Obwohl die Erfindung im Detail durch das Ausführungsbeispiel näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Computerimplementiertes Verfahren zur Simulation einer Anlage (10) oder Maschine (20),
wobei ein Simulationsmodell bereitgestellt wird,
wobei dem Simulationsmodell Eingangsdaten (110) betreffend die Anlage (10) oder Maschine (20) vorgegeben werden,
wobei dem Simulationsmodell ferner Akustikdaten (120) vorgegeben werden,
wobei das Simulationsmodell basierend auf den Eingangsdaten (110) und den Akustikdaten (120) eine Simulation der Anlage (10) oder Maschine (20) mittels akustischer Signale (200) bewirkt.

2. Verfahren nach Anspruch 1, wobei die Eingangsdaten (110) Eingangs-, Ausgangs- und/ oder Zwischensignale der Anlage (10) oder Maschine (20) umfassen.

3. Verfahren nach Anspruch 1 oder 2, wobei die Eingangsdaten (110) Parameter betreffend eine Mechanik oder Elektronik oder einen Zustand der Anlage (10) oder Maschine (20) oder Sensordaten umfassen.

4. Verfahren nach einem der vorstehenden Ansprüche, wobei die Akustikdaten (120) in einer Bibliothek gespeichert werden.

5. Verfahren nach einem der vorstehenden Ansprüche, wobei die Akustikdaten (120) in Abhängigkeit von den Eingangsdaten (110) parametriert werden.

6. Verfahren nach einem der vorstehenden Ansprüche, wobei die Simulation während eines Betriebs der Anlage (10) oder Maschine (20) erfolgt.

7. Verfahren nach einem der Ansprüche 1 bis 5, wobei die Simulation zeitlich einem Betrieb der Anlage (10) oder Maschine (20) vorgelagert erfolgt.

8. Verfahren nach einem der vorstehenden Ansprüche, wobei das Simulationsmodell basierend auf den Eingangsdaten zusätzlich eine Simulation der Anlage (10) oder Maschine (20) mittels graphischer Signale (100) bewirkt.

9. Simulationseinheit (30) zum Simulieren einer Anlage (10) oder Maschine (20), aufweisend
- eine Schnittstelle zum Erhalten von Eingangsdaten (110) betreffend die Anlage (10) oder Maschine (20),
- eine weitere Schnittstelle zum Erhalten von Akustikdaten (120),
- einen Logikbaustein zum Durchführen der Simulation auf Basis eines Simulationsmodells, der Eingangsdaten (110) und der Akustikdaten (120),
- eine Ausgabeeinheit zum Ausgeben eines Simulationsergebnisses umfassend akustische Signale (200).

10. Simulationseinheit nach Anspruch 9, ferner aufweisend eine Nutzerschnittstelle zum Parametrieren der Akustikdaten (120) in Abhängigkeit von den Eingangsdaten (110).

11. Simulationseinheit nach Anspruch 9 oder 10, wobei die Ausgabeeinheit für eine graphische Visualisierung ausgebildet ist.
